# EUROPEAN PATENT SPECIFICATION

(11) **EP 0 601 893 B1**
(45) Date of publication and mention of the grant of the patent: **09.06.1999**
(21) Application number: 93310022.4
(22) Date of filing: 13.12.1993
(51) Int. Cl.: H01J 61/32, H01J 61/56

(54) **Fluorescent lamp**
Fluoreszenzlampe
Lampe fluorescente

(30) Priority: 11.12.1992 US 989284
(43) Date of publication of application: 15.06.1994
(73) Proprietor: FLOWIL INTERNATIONAL LIGHTING (HOLDING) B.V., NL-1077 ZX Amsterdam (NL)
(72) Inventor: Godyak, Valery A., Brookline MA 02146 (US)
(74) Representative: Butler, Michael John

(56) References cited:
- EP-A- 0 447 957
- DE-U- 9 211 367
- US-A- 4 871 944
- PATENT ABSTRACTS OF JAPAN vol. 9, no. 178 (E-330)(1901) 23 July 1985 & JP-A-60 049 550 (MATSUSHITA) 18 March 1985

## Description

This invention relates to a fluorescent lamp. More particularly, this invention relates to a compact fluorescent lamp wherein a lamp ballast circuit located at the center of the lamp is surrounded by fluorescent lamp tube sections of relatively large diameter.

Compact fluorescent lamps are being developed to replace incandescent lamps because fluorescent lamps are considerably more efficient and have longer operating lives than incandescent lamps. The primary obstacles to widespread acceptance of compact fluorescent lamps are the inherent characteristics of fluorescent lamps which dictate that the fluorescent lamp tube must be long and have a small diameter for efficient operation and which require that the fluorescent lamp operate with a ballast circuit. The ballast circuit provides the required voltage and current for lamp starting and operation.

Because of these requirements, prior art compact fluorescent lamps have had one or more disadvantages. Prior art compact fluorescent lamps have been packaged with the ballast circuit located in the lamp base, which has increased the length of the fluorescent lamp. The twin tube fluorescent lamps used in some prior art lamps are relatively long. The overall length has restricted the use of prior compact fluorescent lamps, because the lamps can not fit into some conventional lamp fixtures. Additionally, prior compact fluorescent lamps, formed from long lamp tubes with small diameters, have an appearance which may not be aesthetically pleasing to consumers who are accustomed to incandescent lamps. Covers have been used to hide the long and contorted lamp tubes. However, the covers add to both the cost and the weight of the fluorescent lamp.

The most basic compact fluorescent lamp includes a compact fluorescent lamp tube and a ballast circuit for energizing the lamp tube at 60 Hz. The lamp tube is typically a twin tube lamp which includes two straight sections interconnected at or near one end. The twin tube lamp is generally U-shaped. The ballast circuit is relatively large and heavy and may be mounted in the base of the lamp or in a separate fixture.

US-A-4,835,591 discloses a discharge vessel comprising a plurality of twin tube lamps interconnected by cross connections to form a single discharge path.

US-A-4,746,835 discloses a fluorescent lamp device comprising a plurality of interconnected twin tube lamps disposed in a circular arrangement. A main body having a screw-in type base attached at one end thereof contains a plurality of electronic operating circuit parts.

US-A-4,337,414 discloses a compact fluorescent lamp wherein a convoluted tubular envelope surrounds the ballast component. However, this envelope configuration allows the ballast component to be very visible from both the side and top.

A compact fluorescent lamp using a frequency converting ballast circuit to convert 60 Hz line voltage to a frequency in the range of 20-30KHz is disclosed in US-A-4,857,806. The ballast circuit is mounted in the lamp base, and the high frequency output of the ballast is applied to the lamp filaments.

Compact fluorescent lamps utilizing electrodeless fluorescent lamps have been disclosed in prior art. A closed loop magnetic core transformer, contained in a reentrant cavity in the lamp envelope, induces a discharge in an electrodeless fluorescent lamp in US-A-4,005,330. Discharge is induced by a magnetic core coil within the envelope of an electrodeless fluorescent lamp in the light source disclosed in US-A-4,017,764. An electrodeless fluorescent light source utilizing an air core coil for inductive coupling at a frequency of about 4MHz is disclosed in US-A-4,010,400. However, such a light source has a tendency to radiate at the frequency of operation and exhibits nonuniform plasma excitation.

A compact fluorescent light source wherein high frequency power is capacitively coupled to a low pressure discharge is disclosed in US-A-4,266,167. The lamp envelope has an outer shape similar to that of an incandescent lamp. An outer conductor, typically a conductive mesh is disposed on the outer surface of the lamp envelope, and an inner conductor is disposed in a reentrant cavity in the lamp envelope. Frequencies in the range of 100MHz to 10GHz are suggested. All of the prior art compact fluorescent lamps have a number disadvantages, including a size and shape that are incompatible with incandescent lamp fixtures, radiation at the frequency of operation, excessive cost and an appearance that is not aesthetically pleasing.

EP-A-0 447 957 discloses a compact lamp having the features of the preamble of claim 1. However, the lamp comprises a fluorescent lamp tube either formed as a spiral structure, a ring of U-shaped tubes or a twisted structure arranged around a ballast unit.

Further compact fluorescent lamp arrangements are known from JP-A-60/49550 and US-A-4871944. These lamps have relatively widely spaced U-shaped tubes and additionally require an outer cover.

According to the present invention, there is provided a fluorescent lamp having a lamp base, a ballast unit supported by said base, means for supplying electrical energy and a number of fluorescent lamp tube portions which substantially encompass said ballast unit, characterised in that said lamp tube portions form a plurality of substantially U-shaped twin tubes, at least one of which straddles said ballast unit and at least two of which are disposed one on each side of the straddling twin tube, and in that the gap between adjacent lamp tube portions is not more than 3.2 millimetres such that said ballast unit is substantially hidden from view.

In a preferred embodiment, the fluorescent lamp tube comprises a plurality of interconnected tube sections that surround the ballast unit. Preferably, the fluorescent lamp tube comprises a triple twin tube including three generally U-shaped portions that are interconnected to form a continuous discharge path. However, the fluorescent lamp tube may be constructed from four, five or more U-shaped portions. In a preferred embodiment, three twin tubes are disposed in separate parallel planes.

The fluorescent lamp tube preferably includes filaments mounted in opposite ends thereof. The filaments receive electrical energy from the ballast unit. The ballast unit can have a reflective surface for reflecting incident light. A substantial portion of the ballast unit may be located in a central portion of the region normally occupied by the fluorescent lamp tube.

The overall length of the compact fluorescent lamp is reduced in comparison with prior art lamps by enclosing the ballast circuit with the lamp tube sections, rather than mounting the ballast circuit in the lamp base. As a result, the compact fluorescent lamp can be used in most lamp fixtures which can accommodate a standard incandescent lamp. The overall shape of the compact fluorescent lamp is configured to resemble a standard incandescent lamp and to provide an aesthetically pleasing appearance. The compact fluorescent lamp can be constructed with fluorescent lamp tube sections having a larger diameter than prior art fluorescent lamps tubes. By constructing the compact fluorescent lamp of the present invention with larger diameter tubes than prior art lamps, the internal surface area of the tube is increased, and the load and the temperature at the internal surface are decreased. Thus, the life of the phosphor coating and the compact fluorescent lamp is extended.

An embodiment of the present invention will now be described by way of example only, and with reference to the accompanying drawings, in which:
FIG. 1A shows a side elevation of an embodiment of a fluorescent lamp in accordance with the present invention,
FIG. 1B shows a partial cross-sectional view of the fluorescent lamp of FIG. 1A taken along line 1B-1B,
FIG. 2A shows a plan view of the fluorescent lamp shown in FIG. 1A,
FIG. 2B shows a cross-sectional view of the fluorescent lamp of FIG. 1A taken along line 2B-2B.

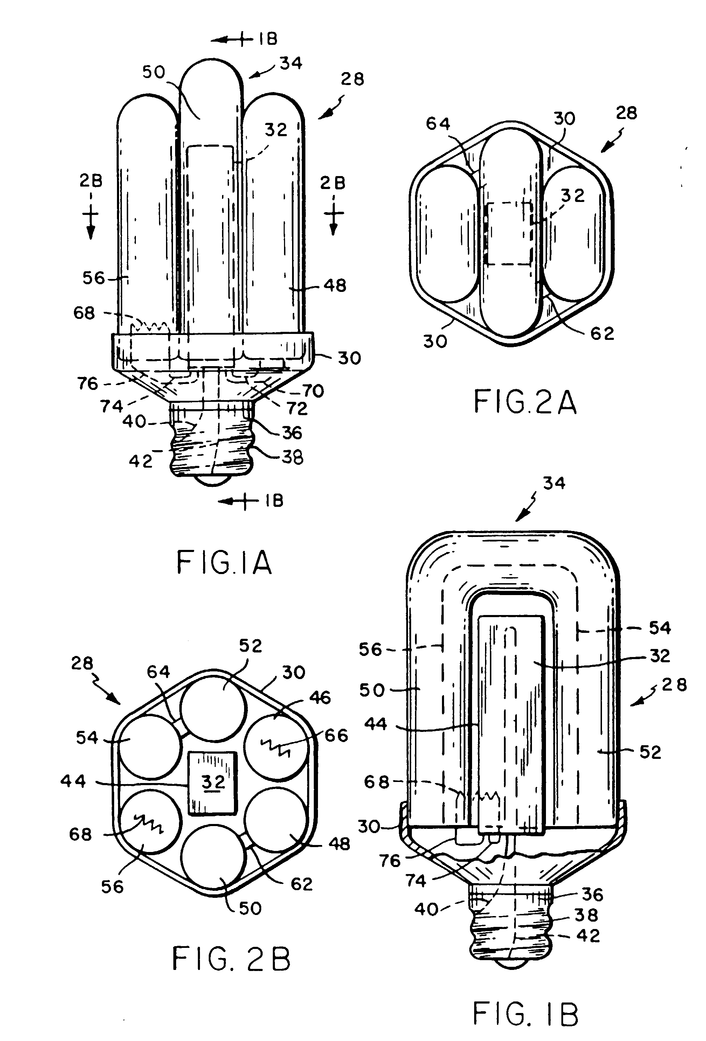

A preferred compact fluorescent lamp 28 in accordance with the present invention is illustrated in FIGS. 1A, 1B, 2A and 2B. The fluorescent lamp 28 includes a lamp base 30, a ballast unit 32, and a fluorescent lamp tube 34 and is constructed to have an overall length and shape which resemble those of a standard incandescent lamp. The lamp base 30 includes a plug 36 with screw-type threads 38. The plug 36, which extends downwardly from the base, is adapted for installation in a standard incandescent lamp socket which provides 120 volt/60 Hz household power.

The ballast unit 32 is mounted to the base 30 and extends upwardly from the base 30. While the ballast unit 32 is preferably affixed to base 30, the ballast unit 32 is not enclosed within base 30 as in prior art compact fluorescent lamps. Instead, the ballast 32 extends upwardly from the base 30 into a central portion of the region normally occupied by the fluorescent lamp tube. Thus, the base 30 provides support for ballast unit 32 but does not enclose it. Since the ballast unit is not packaged in the base 30, the size of the base 30 can be reduced in comparison with prior art compact fluorescent lamps. As a result, the overall length of the fluorescent lamp 28 is reduced. The ballast unit 32 is coupled to the plug 36 by leads 40 and 42 and is powered by conventional line voltage received through the plug 36. The ballast unit 32 provides the required voltage and current for starting and operating the fluorescent lamp tube 34. The circuit details of ballast unit 32 are outside the scope of the present invention. However it will be understood that numerous ballast units are well known to those skilled in the art. Any type of ballast circuit may be used in the compact fluorescent lamp 28, such as a magnetic, RF, microwave, electronic or pulse driven ballast circuit.

A reflective cover 44 or coating may be placed over the outer surface of the ballast unit 32 to reflect light that is incident on the ballast unit 32. The reflective outer cover 44 may be made from any type of reflecting material, such as white plastic or aluminum.

The fluorescent lamp tube 34 comprises a lighttransmissive envelope which contains a fill material, such as argon and mercury, for sustaining a low pressure discharge. The lamp tube 34 has a phosphor coating on its inside surface. The phosphor coating emits visible light when stimulated by ultraviolet radiation from the discharge. Suitable phosphor coatings are well known in the art.

In the compact fluorescent lamp 28, the fluorescent lamp tube 34 is formed from multiple tube sections 46, 48, 50, 52, 54 and 56, typically straight, which are interconnected at or near their ends in an arrangement which surrounds the ballast unit 32. The tube sections 46-56 are connected to provide a continuous discharge path through the lamp tube 34. In particular, tube section 46 and 56 are at opposite ends of lamp tube 34 and contain filaments 66 and 68, respectively. Tube sections 46 and 48 are interconnected at their upper ends to form a first U-shaped tube portion. Tube sections 52 and 50 are interconnected at their upper ends to form a second U-shaped tube portion. Tube sections 54 and 56 are interconnected at their upper ends to form a third U-shaped tube portion. Tube sections 48 and 50 are interconnected at their lower ends by a "kiss joint" 62, and tube sections 52 and 54 are interconnected at their lower ends by a "kiss joint" 64. Thus, the tube sections are interconnected to form a continuous discharge path between filaments 66 and 68. The U-shaped portion formed by tube sections 50 and 52 straddles the ballast unit 32 so that the upper portion of the ballast unit 32 is completely hidden from view from the top. Thus, tube sections 50 and 52 are longer and are spaced farther apart than tube sections in the other U-shaped portions. The tube sections 54 and 56 and the tube sections 46 and 48 are relatively closely spaced to ensure that the ballast unit 32 is substantially hidden from view. The opposite ends of the lamp tube are secured to the base 30. With this arrangement, the ballast unit 32 is effectively surrounded and hidden from view by the lamp tube sections 46-56. Since the base 30 is not required to enclose the ballast unit 32, the base 30 can be relatively small and the overall length of the compact fluorescent lamp 28 is reduced in comparison with prior art lamps.

In the preferred embodiment of FIGS. 1A-2B, a "triple twin tube" fluorescent lamp tube is illustrated. Typically, a "single twin tube" or "folded tube" includes a pair of straight tube sections that are interconnected at or near one end to form a generally U-shaped structure. The triple twin tube 34 includes three twin tubes, with each adjoining twin tube interconnected to the other by a "kiss joint". The kiss joints 62 and 64 are best shown in FIG. 2B. The triple twin tube provides a continuous discharge path from one end of the tube to the other and surrounds the ballast unit 32. As best illustrated in FIGS 1A and 2A, the three twin tubes are preferably disposed in parallel planes. As illustrated, each of the generally U-shaped portions may be in a contiguous relationship with an adjacent U-shaped portion.

The fluorescent lamp tube 34 includes first cathode filament 66 and second cathode filament 68 sealed therein at opposite ends. A pair of leads 70 and 72 couple the first filament 66 to the ballast unit 32 and a pair of leads 74 and 76 couple the second filament 68 to the ballast unit 32. The first and second filaments 66 and 68 couple energy from the ballast unit 32 to the low pressure discharge within the lamp tube 34.

The compact fluorescent lamp 28 uses tube sections 46-56 with a larger diameter than prior art compact fluorescent lamps. As is well known, as the length of the lamp tube decreases, the diameter of the lamp tube must decrease to obtain the desired voltage across the lamp tube. In this embodiment, the triple twin tube, formed by interconnected tube sections 46-56, has a long discharge path, thus permitting larger diameter tubes to be used. The diameter of lamp tube sections 46 to 56 is preferably in a range of about 15mm-20mm. With larger diameter lamp tubes, the compact fluorescent lamp 28 can be constructed to more nearly resemble an incandescent lamp than prior art small diameter twin tube fluorescent lamps. As a result, the appearance of the compact fluorescent lamp is aesthetically pleasing. The compact fluorescent lamp 28 does not require a cover, as do many prior art compact fluorescent lamps.

With larger diameter lamp tubes, the inside surface area of the fluorescent lamp tube 28 is increased, which helps to extend the life of the phosphor coating and thus the life of the fluorescent lamp. The rate of deterioration of the phosphor coating on the internal surface of the lamp tube increases as the load and the temperature on the inside surface increase. By constructing the compact fluorescent lamp with a larger diameter tube, the inside surface area of the tube is increased, and the load and the temperature on the side surface are decreased. Thus, the life of the phosphor coating and the compact fluorescent lamp is extended.

By way of example, a compact fluorescent lamp formed with a lamp tube having a diameter of 17.5mm (T5.5) can be constructed with an overall height of 101-114mm (4-4½ inches), a width of 50-64mm (2-2½ inches), can be loaded with sixteen to twenty watts and can output 900-1200 lumens. By way of another example, a compact fluorescent lamp formed with a lamp tube having a diameter of 17.5mm (T5.5) can be constructed with an overall height of 127-140mm (5-5½ inches), a width of 50-64mm (2-2½ inches), can be loaded with twenty-five to thirty watts and can output 1500-1800 lumens. The tube sections are arranged such that adjacent tubes are closely disposed so that the ballast circuit is substantially hidden from view. Typically, the gap between adjacent tubes is not more than about 3.2mm (⅛ inch). In a preferred embodiment, each of the generally U-shaped portions lie in separate parallel planes and are in a contiguous relationship with an adjacent U-shaped portion.

The compact fluorescent lamp 28 may be used in the same manner as a standard incandescent lamp. The plug 36 on the compact fluorescent lamp is installed in a conventional lamp socket. When power is supplied to the fluorescent lamp, a low pressure discharge is initiated in the lamp tube 34. The low pressure discharge emits radiation, typically in the ultraviolet, which stimulates emission of visible light by the phosphor coating. When the fluorescent lamp emits light, it closely resembles an incandescent lamp. The reflective cover 44 or coating on the ballast circuit 32 reflects light incident on the ballast circuit.

Other preferred arrangements include embodiments in which the ballast unit is obscured from view by a number of separate fluorescent lamp tubes, for example three or more substantially U-shaped twin tube lamps.

A preferred compact fluorescent lamp of the present invention may be a suitable replacement for an incandescent lamp; aesthetically pleasing; similar in size and shape to an incandescent lamp; and in which the ballast circuit may be substantially hidden from view by the lamp envelope.

## Claims

1. A fluorescent lamp (28) having a lamp base (30), a ballast unit (32) supported by said base, means for supplying electrical energy (36, 40, 42 etc.) and a number of fluorescent lamp tube portions (46, 48, 50 etc.) which substantially encompass said ballast unit (23), characterised in that said lamp tube portions (46, 48, 50 etc.) form a plurality of substantially U-shaped twin tubes (46 & 48, 50 & 52, etc.), at least one of which straddles said ballast unit (32) and at least two of which are disposed one on each side of the straddling twin tube, and in that the gap between adjacent lamp tube portions is not more than 3.2 millimetres (⅛ inch) such that said ballast unit (23) is substantially hidden from view.

2. A lamp as claimed in claim 1, characterised in that the upper portion of said ballast unit (32) furthest from the lamp base (30) is completely hidden from view from the top by the substantially U-shaped twin tube (50,52) which straddles said ballast unit (32).

3. A lamp as claimed in claim 1 or 2, characterised in that there are three substantially U-shaped twin tubes (46 & 48, 50 & 52, etc.) which are disposed in separate, generally parallel planes.

4. A lamp as claimed in claims 1, 2 or 3, characterised in that each substantially U-shaped twin tube (46 & 48, 50 & 52, etc.) is contiguous with the adjacent twin tube.

5. A lamp as claimed in any of the preceding claims, characterised in that said lamp tube portions (46, 48, 50 etc.) are defined by more than one fluorescent lamp tube (34).

6. A lamp as claimed in any of the preceding claims, characterised in that a substantial portion of said ballast unit (32) extends from said lamp base (30).

7. A lamp as claimed in any of the preceding claims, characterised in that said ballast unit (32) has a reflective surface.

8. A lamp as claimed in any of the preceding claims, characterised in that the lamp tube portions have a diameter of about 15-20mm.

9. A lamp as claimed in any of the preceding claims, characterised in that the lamp has an overall height of 101-114 mm (4-4½ inches).

10. A lamp as claimed in any of the preceding claims, characterised in that the lamp has an overall width of 50-64 mm (2-2½ inches).

## Patentansprüche

1. Leuchtstofflampe (28) mit einem Lampensockel (30), einem von dem Sockel gehaltenen Vorschaltgerät (32), Elementen für die Zufuhr elektrischer Energie (36, 40, 42 etc.), und einer Anzahl von fluoreszenten Lampenröhrenabschnitten (46, 48, 50 etc.), die im wesentlichen das Vorschaltgerät (32) umgeben, dadurch **gekennzeichnet**, daß die Lampenröhrenabschnitte (46, 48, 50 etc.) eine Mehrzahl von im wesentlichen U-förmigen Doppelröhren (46 & 48, 50 & 53, etc.) bilden, von denen zumindest eine das Vorschaltgerät (32) überspannt und von denen zumindest zwei zu jeweils einer auf jeder Seite der überspannenden Doppelröhre angeordnet sind, und daß der Spalt zwischen aneinander angrenzenden Lampenröhrenabschnitten nicht mehr als 3,2 Millimeter (1/8 Zoll) beträgt, derart, daß das Vorschaltgerät (32) dem Auge im wesentlichen verborgen ist.

2. Lampe nach Anspruch 1, dadurch **gekennzeichnet**, daß der obere Abschnitt des Vorschaltgeräts (32), der von dem Lampensockel (30) am weitesten entfernt ist, vollständig gegenüber einer Sicht von oben verborgen ist, und zwar durch die im wesentlichen U-förmige Doppelröhre (50, 52), welche das Vorschaltgerät (32) überspannt.

3. Lampe nach Anspruch 1 oder 2, dadurch **gekennzeichnet**, daß drei im wesentlichen U-förmige Doppelröhren (46 & 48, 50 & 52, etc.) vorhanden sind, die in getrennten, im wesentlichen parallelen Ebenen angeordnet sind.

4. Lampe nach Anspruch 1, 2, oder 3, dadurch **gekennzeichnet**, daß jede im wesentlichen U-förmige Doppelröhre (46 & 48, 50 & 52, etc.) an die angrenzende Doppelröhre anstößt.

5. Lampe nach irgendeinem der vorhergehenden Ansprüche, dadurch **gekennzeichnet**, daß die Lampenröhrenabschnitte (46, 48, 50 etc.) durch mehr als eine Leuchtstofflampenröhre (34) definiert sind.

6. Lampe nach irgendeinem der vorhergehenden Ansprüche, dadurch **gekennzeichnet**, daß sich ein wesentlicher Abschnitt des Vorschaltgeräts (32) von dem Lampensockel (30) wegerstreckt.

7. Lampe nach irgendeinem der vorhergehenden Ansprüche, dadurch **gekennzeichnet**, daß das Vorschaltgerät (32) eine reflektierende Oberfläche besitzt.

8. Lampe nach irgendeinem der vorhergehenden Ansprüche, dadurch **gekennzeichnet**, daß die Lampenröhrenabschnitte einen Durchmesser von etwa 15-20 mm aufweisen.

9. Lampe nach irgendeinem der vorhergehenden Ansprüche, dadurch **gekennzeichnet**, daß die Lampe eine Gesamthöhe von 101-114 mm (4-4 1/2 Zoll) aufweist.

10. Lampe nach irgendeinem der vorhergehenden Ansprüche, dadurch **gekennzeichnet**, daß die Lampe eine Gesamtbreite von 50-64 mm (2-2 1/2 Zoll) aufweist.

## Revendications

1. Lampe fluorescente (28) ayant un culot (30) de lampe, une unité de ballast (32) portée par le dit culot, des moyens (36, 40, 42, etc...) pour appliquer une énergie électrique et un certain nombre de parties (46, 48, 50, etc...) de tubes fluorescents de la lampe qui entourent de façon substantielle la dite unité de ballast (23),
**caractérisée en ce que**
les dites parties (46, 48, 50, etc...) de tubes de la lampe constituent une pluralité de tubes jumeaux substantiellement en forme de U (46 & 48, 50 & 52, etc...), dont au moins un enjambe la dite unité de ballast (32) et dont au moins deux sont disposés de part et d'autre du tube jumeau l'enjambant,
**et en ce que**
l'espace entre des parties adjacentes de tubes de la lampe est inférieur à 3,2 millimètres (un huitième de pouce), de telle manière que la dite unité de ballast (23) est substantiellement cachée à la vue.

2. Lampe selon la revendication 1, **caractérisée en ce que** la partie supérieure de la dite unité de ballast (32) est complètement cachée à la vue à partir du sommet par le tube jumeau substantiellement en forme de U qui enjambe la dite unité de ballast (32).

3. Lampe selon la revendication 1 ou 2, **caractérisée en ce qu'**il y a trois tubes jumeaux substantiellement en forme de U (46 & 48, 50 & 52, etc...) qui sont disposés dans des plans séparés généralement parallèles.

4. Lampe selon la revendication 1, 2 ou 3, **caractérisée en ce que** chaque tube jumeau substantiellement en forme de U (46 & 48, 50 & 52, etc...) est contigu au tube jumeau adjacent.

5. Lampe selon l'une quelconque des revendications précédentes, **caractérisée en ce que** les dites parties (46, 48, 50, etc...) de tubes de la lampe sont définies par plus d'un tube fluorescent (34) de la lampe.

6. Lampe selon l'une quelconque des revendications précédentes, **caractérisée en ce qu'**une partie substantielle de la dite unité de ballast (32) fait saillie du dit culot (30) de la lampe.

7. Lampe selon l'une quelconque des revendications précédentes, **caractérisée en ce que** la dite unité de ballast (32) présente une paroi réfléchissante.

8. Lampe selon l'une quelconque des revendications précédentes, **caractérisée en ce que** les parties des tubes de la lampe ont un diamètre compris entre 15 et 20 mm environ.

9. Lampe selon l'une quelconque des revendications précédentes, **caractérisée en ce que** la lampe présente une hauteur totale comprise entre 101 et 114 mm (entre 4 et 4,5 pouces).

10. Lampe selon l'une quelconque des revendications précédentes, **caractérisée en ce que** la lampe présente une largeur totale comprise entre 50 et 64 mm (entre 2 et 2,5 pouces).
